# EUROPEAN PATENT SPECIFICATION

(11) **EP 3 424 766 B1**
(45) Date of publication and mention of the grant of the patent: **30.12.2020**
(21) Application number: 18180965.8
(22) Date of filing: 29.06.2018
(51) Int. Cl.: B60K 35/00, B60R 1/00

(54) **VEHICLE SURROUNDING DISPLAY APPARATUS**
FAHRZEUGUMGEBUNGSANZEIGEVORRICHTUNG
APPAREIL D'AFFICHAGE PÉRIPHÉRIQUE DE VÉHICULE

(30) Priority: 03.07.2017 JP 2017130288
(43) Date of publication of application: 09.01.2019
(73) Proprietor: TOYOTA JIDOSHA KABUSHIKI KAISHA, Toyota-shi, Aichi 471 8571 (JP); DENSO TEN LIMITED, Kobe-shi, Hyogo 6528510 (JP)
(72) Inventor: YORIFUJI, Yamato, Aichi, 471-8571 (JP); MAEJIMA, Kohei, Aichi, 471-8571 (JP); ITOH, Takuya, Aichi, 471-8571 (JP); YAMAZAKI, Eriko, Aichi, 471-8571 (JP); KIYO, Kouei, Hyogo 652-8510 (JP); HATAKEYAMA, Yukiko, Hyogo 652-8510 (JP)
(74) Representative: J A Kemp LLP

(56) References cited:
- JP-A- 2012 056 534
- JP-A- 2015 076 645
- JP-A- 2015 076 645
- US-A1- 2016 185 294

## Description

### TECHNICAL FIELD

The present invention relates to a vehicle surrounding display apparatus for displaying on a display screen an image (a bird's-eye view image) of a vehicle and a surrounding region thereof seen from a bird's-eye view and another image different from the bird's-eye view image.

### BACKGROUND ART

A vehicle surrounding display apparatus has been conventionally known. This apparatus is mounted in a vehicle and displays on a display screen with a predetermined size a bird's-eye view image and another image different from the bird's-eye view image, the bird's-eye view image being an image of the vehicle and a surrounding region thereof seen from a bird's-eye view (for example, refer to JP2015076645 A).

A vehicle surrounding display apparatus according to the , JP2015076645 A (hereinafter, refer to as a "prior art apparatus") has a plurality of display modes depending on a driving situation of a driver. The prior art apparatus changes a display range of a surrounding region in a bird's-eye view image among these plurality of display modes. For instance, let us define that an area where the bird's-eye view image is displayed on a display screen is a first display area and an area where another image is displayed on the display screen is a second display area. Then, the prior art apparatus changes the display range of the surrounding region in the bird's-eye view image by fixing a display magnification of an own vehicle in the bird's-eye view image and changing a size of the first display area itself. Specifically, the prior art apparatus increases a size of the first display area so as to be larger than a predetermined reference size, and thereby displays the surrounding region in the bird's-eye view image in a wide display range. The prior art apparatus decreases a size of the first display area so as to be smaller than the predetermined reference size, and thereby displays the surrounding region in the bird's-eye view image in a narrow display range.

US 2016/0185294 A1 discloses a device whereby the position of an obstacle can be perceived on a monitor without compromising the effectiveness of displaying an overhead image on the monitor. An overhead image generating unit generates an overhead image from images captured using a plurality of cameras, and the overhead image is displayed in an auxiliary display area of a monitor. When an obstacle detection part detects an obstacle in proximity to a vehicle, a specified information output unit emphasizes the display of a frame in the outer side of a divided area of the overhead image that contains the obstacle. Touching the auxiliary display area with a finger or the like during this emphasized display causes the captured image of the obstacle to be enlarged and displayed in the auxiliary display area.

JP 2012 056534 A discloses a parking support device which facilitates confirmation of the possibility of a parking method such as forward parking or backward parking and selection of the parking method. The parking support device includes: a forward parking possibility determination unit which outputs forward parking possible information when forward parking of an own vehicle to a parking area is possible; a backward parking possibility determination unit which outputs backward parking possible information when backward parking of the own vehicle to the parking area is possible; a parking support basic image generation unit which generates a parking support basic image for monitor display including the parking area based on a photographed image; a display image generation unit which generates a parking support display image by incorporating a forward parking selection icon for selecting parking support of the forward parking and a backward parking selection icon to the parking support basic image; and an icon response unit which requests a parking guide in response to a user's selecting operation to the parking selection icons.

### SUMMARY OF THE INVENTION

It is described JP2015076645 A that according to the prior art apparatus, the display range of the surrounding region in the bird's-eye view image can be properly changed depending on the display modes. However, the prior art apparatus increases the size of the first display area itself when displaying the surrounding region in the bird's-eye view image in the wide display range, and therefore a size of the second display area may become smaller in some positional relationships (layouts) between the first display area and the second display area. In this case, it is likely that another image displayed on the second display area becomes small and thus another image is not displayed properly (that is, another image becomes difficult to see for the driver).

The present invention is made to resolve the problem above. That is, one of objects of the present invention is to provide a vehicle surrounding display apparatus capable of, in a case of displaying on a display screen a bird's-eye view image and another image different from the bird's-eye view image, properly changing a display range of a surrounding region in the bird's-eye view image between two different display modes while suitably displaying another image.

A vehicle surrounding display apparatus of the present invention (hereinafter, also referred to as a "present invention apparatus") is applied to a vehicle.

The present invention is defined in the appended claims.

In the present invention apparatus, when the first mode (PVM mode) is selected as the display mode, the display control means generates the first bird's-eye view image of the vehicle and the first surrounding region thereof seen from the bird's-eye view and displays this generated image in the first display area on the display screen. Besides, when the second mode (IPA mode) is selected as the display mode, the display control means generates the second bird's-eye view image of the vehicle and the second surrounding region thereof wider than the first surrounding region seen from the bird's-eye view and displays this generated image in the first display area which is the same area as the area where the first bird's-eye view image is displayed. The size of this first display area is fixed. According to this configuration, the size of the first display area is prevented from being changed due to a change in the display range of the surrounding region in the bird's-eye view image, and therefore it is prevented that the size of the second display area (an area where the first another image different from the first bird's-eye view image or the second another image different from the second bird's-eye view image is displayed) on the display screen is changed. Therefore, the present invention apparatus can properly change the display range of the surrounding region in the bird's-eye view image between two different display modes while suitably displaying another image.

The display range of the surrounding region (the second surrounding region) in the bird's-eye view image (the second bird's-eye view image) of when the parking assist control is being performed becomes wider than the display range of the surrounding region (the first surrounding region) in the bird's-eye view image (the first bird's-eye view image) of when the parking assist control is not being performed. Therefore, when the parking assist control is performed, the target parking position is easily displayed in the bird's-eye view image. This enables the driver to confirm (check) the target parking position and/or whether or not there is an obstacle on the target path by referring to the bird's-eye view image. According to this configuration, the surrounding region in the bird's-eye view image can be displayed in a suitable display range for the parking assist control.

In this case,
the first another image (102) and the second another image (202) are traveling direction images which are images including a region in a traveling direction of the vehicle, and
the display control means is configured to narrow an angle of view of the second another image (202) compared with an angle of view of the first another image (102).

In the traveling direction image, a traveling direction front region and a traveling direction left and right region are displayed, where the traveling direction front region is a region positioned ahead of the traveling direction of the vehicle and the traveling direction left and right region is a region positioned at a left part and a right part of the traveling direction front region. According to this configuration, the angle of view of the traveling direction image (the second another image) of when the parking assist control is being performed is narrowed compared with the angle of view of the traveling direction image (the first another image) of when the parking assist control is not being performed. That is, when the parking assist control is performed, the display range of the traveling direction left and right region in the traveling direction image is narrowed compared with when the parking assist control is not performed. The size of the second display area (a display area where the traveling direction image is displayed) remains unchanged (is fixed) between two different modes. Therefore, if the display range of the traveling direction left and right region in the traveling direction image is narrowed, the traveling direction front region is displayed in a magnified manner by that amount. Hence, when the parking assist control is performed, the driver can more easily confirm a process through which the vehicle travels by referring to the traveling direction image.

Besides, in general, in a case of a relatively wide angle of view, a left and right range in an image is displayed in a relatively distorted manner, whereas in a case of a relatively narrow angle of view, the left and right range in the image is displayed with little distortion. Therefore, according to the configuration above, when the parking assist control is performed, the traveling direction front region in the traveling direction image is displayed with little distortion. Hence, the traveling direction front region in the traveling direction image can be displayed in a suitable display manner for the parking assist control.

In another aspect of the present invention apparatus,
the parking assist control means is configured to determine a target stop position where the vehicle tentatively stops in order to switch a traveling direction from forward to backward,
the target path includes a first path (P1) along which the vehicle travels forward from the current position to the target stop position and a second path (P2) along which the vehicle travels backward from the target stop position to the target parking position, and
the display control means is configured, when the second mode (IPA mode) is selected as the display mode, to display both of the target stop position and the target parking position in the second bird's-eye view image (201) at least until the vehicle reaches the target stop position from the current position.

In this configuration, when the parking assist control is being performed, not only the target stop position but also the target parking position are displayed in the bird's-eye view image at least until the vehicle reaches the target stop position along the first path. Therefore, when the vehicle travels forward (advances) along the first path, the driver can confirm not only the first path but also the second path by referring to the bird's-eye view image. This enables the driver to check whether or not there is an obstacle not only on the first path but also on the second path, and therefore when some obstacle is detected on the target path, the parking assist control can be immediately stopped by a driving operation by the driver. According to this configuration, the surrounding region in the bird's-eye view image can be displayed in a suitable display range for the parking assist control. It should be noted that "to display both of the target stop position and the target parking position in the bird's-eye view image" means to display at least a part of the target stop position and at least a part of the target parking position in the bird's-eye view image.

In the above description, references used in the following descriptions regarding embodiments are added with parentheses to the elements of the present invention, in order to assist in understanding the present invention. However, those references should not be used to limit the scope of the invention.

### BRIEF DESCRIPTION OF THE DRAWINGS

FIG. 1 is a schematic block diagram of a vehicle surrounding display apparatus (hereinafter, referred to as a "present embodiment apparatus") according to an embodiment of the present invention.
FIG. 2 is a plan view showing each of attached positions of surrounding sensors and camera sensors.
FIG. 3 is a diagram showing an imaging range S1 in which a front region of an own vehicle is imaged with a wide angle of view and an imaging range S2 in which the front region is imaged with a narrow angle of view.
FIG. 4 is a diagram showing positions of a PVM switch and an IPA switch.
FIG. 5 is a diagram showing an image (a display pattern) displayed on a touch panel when a PVM mode is selected as a display mode.
FIG. 6 is a diagram showing the touch panel (display screen) divided into three areas R1, R2, and R3.
FIG. 7 is a diagram showing a first path P1 and a second path P2 during a performance of IPA.
FIG. 8 is a diagram showing an image (a display pattern) displayed on a touch panel when an IPA mode is selected as a display mode.
FIG. 9 is a flowchart showing a switching between two display modes.
FIG. 10 is a flowchart showing a switching between two display modes of a vehicle surrounding display apparatus according to a modification example 1 of the embodiment of the present invention.
FIG. 11 is a schematic block diagram of a vehicle surrounding display apparatus according to a modification example 2 of the embodiment of the present invention (hereinafter, referred to as a "second modification apparatus").
FIG. 12 is a flowchart showing a switching between two display modes of the second modification apparatus.

### DESCRIPTION OF THE EMBODIMENT

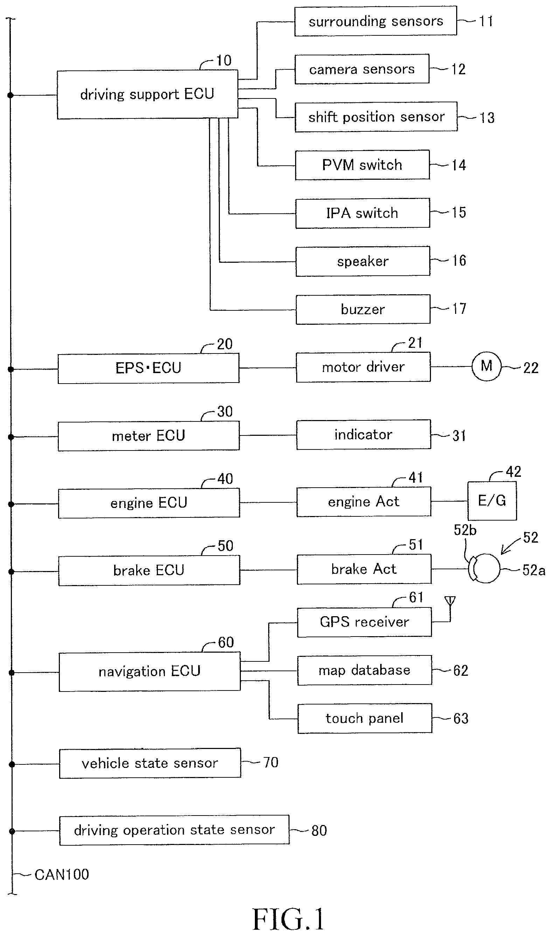

Hereinafter, a description about a vehicle surrounding display apparatus according to an embodiment of the present invention (hereinafter, also referred to as a "present embodiment apparatus") will be made, referring figures. The present embodiment apparatus is applied to a vehicle (hereinafter, may be referred to as an "own vehicle" in order to distinguish it from other vehicles), and comprises, as shown in FIG. 1, a driving support ECU 10, an electrically-driven power steering ECU (EPS·ECU) 20, a meter ECU 30, an engine ECU 40, a brake ECU 50, and a navigation ECU 60. Hereinafter the driving support ECU 10 may be also referred to as a "DSECU 10".

Each of the ECUs is an electric control unit comprising a microcomputer as a main part. Those ECUs are connected via CAN (Controller Area Network) 100 so that the ECUs are capable of mutually transmitting and receiving information. In the present specification, the microcomputer includes CPU, ROM, RAM, a non-volatile memory, an interface I/F, or the like. The CPU is configured to realize/perform various functions by executing instructions (i.e., programs or routines) stored in the ROM. Some of those ECUs or all of those ECUs may be integrated to one ECU.

A plurality kinds of vehicle state sensors 70 for detecting states of the vehicle and a plurality kinds of driving operation state sensors 80 for detecting driving operation states are connected to the CAN 100. The vehicle state sensors 70 include a vehicle speed sensor for detecting a traveling speed of the vehicle, a front-rear G sensor for detecting an acceleration of the vehicle in a front-rear direction, a lateral G sensor for detecting an acceleration of the vehicle in a lateral direction, a yaw rate sensor for detecting a yaw rate of the vehicle, and the like.

The driving operation state sensors 80 include an acceleration operation amount sensor for detecting an operation amount of an accelerator pedal, a brake operation amount sensor for detecting an operation amount of a brake pedal, a brake switch for detecting whether or not a brake pedal is operated, a steering angle sensor for detecting a steering angle, a steering torque sensor for detecting a steering torque, and the like.

Information detected by the vehicle state sensors 70 and the driving operation state sensors 80 (referred to as a "sensor information") is transmitted to the CAN 100. Each of the ECUs can use the sensor information transmitted to the CAN 100. It should be noted that the sensor information is information of sensors connected to a specific ECU and may be transmitted to the CAN 100 from that specific ECU.

The DSECU 10 is a central control apparatus to perform various driving supports for the driver. The DSECU 10 displays on a display screen an image including a surrounding region of the own vehicle, a front or a rear region of the own vehicle, and the like and thereby supports (assists) the driver's driving. The display screen in the present embodiment is a touch panel 63 which will be described later and is provided at a position visible from the driver.

Surrounding sensors 11, camera sensors 12, a shift position sensor 13, a panoramic view monitor (PVM) switch 14, intelligent parking assist (IPA) switch 15, a speaker 16 and a buzzer 17 are connected to the DSECU 10. Hereinafter, the panoramic view monitor switch 14 is referred to as a "PVM switch 14" and the intelligent parking assist switch 15 is referred to as an "IPA switch 15".

The surrounding sensors 11 comprises a front center surrounding sensor 11FC, a front right surrounding sensor 11FR, a front left surrounding sensor 11FL, a rear right surrounding sensor 11RR, and a rear left surrounding sensor 11RL. Each of the surrounding sensors 11FC, 11FR, 11FL, 11RR, 11 RL is a radar sensor. Although these sensors have different detection regions, they basically have same configurations with each other.

The surrounding sensors 11 comprise a radar transmission/reception part and a signal processing part (illustration omitted). The radar transmission/reception part emits an electric wave in a millimeter waveband (hereinafter, referred to as a "millimeter wave"), and receives a millimeter wave (i.e., a reflected wave) reflected from a three-dimensional object which is present in the emitted area (for example, another vehicle, a pedestrian, a bicycle, a building, and the like). The signal processing part acquires information (hereinafter, referred to as "surrounding information") indicating a distance between the own vehicle and the three-dimensional object, a relative speed between the own vehicle and the three-dimensional object, a relative position (direction) of the three-dimensional object with respect to the own vehicle, and the like to provide the DSECU 10 with the acquired information.

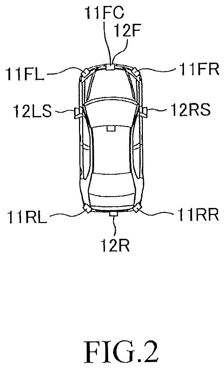

As shown in FIG. 2, the front center surrounding sensor 11FC is provided at a front center part of a vehicle body, and detects a three-dimensional object present in the front region of the own vehicle. The front right surrounding sensor 11FR is provided at a front right corner part of the vehicle body, and mainly detects a three-dimensional object present in a front right region of the own vehicle. The front left surrounding sensor 11FL is provided at a front left corner part of the vehicle body, and mainly detects a three-dimensional object present in a front left region of the own vehicle. The rear right surrounding sensor 11RR is provided at a rear right corner part of the vehicle body, and mainly detects a three-dimensional object present in a rear right region of the own vehicle. The rear left surrounding sensor 11RL is provided at a rear left corner part of the vehicle body, and mainly detects a three-dimensional object present in a rear left region of the own vehicle.

It should be noted that although the radar sensor is used as each of the surrounding sensors 11 in the present embodiment, a clearance sonar, a LIDER (light detection and ranging/laser imaging detection and ranging) sensor, or the like may be adopted instead.

The camera sensors 12 comprise a front camera sensor 12F, a right lateral camera sensor 12RS, a left lateral camera sensor 12LS, and a rear camera sensor 12R. Each of the camera sensors 12F, 12RS, 12LS, 12R is a sensor comprising a camera part to image the surrounding region. Although these sensors have different imaging ranges (regions), they basically have same configurations with each other.

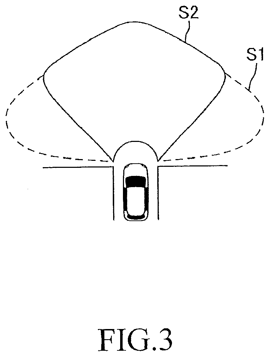

The front camera sensor 12F is provided at the front center part of the vehicle body, and images the front region of the own vehicle. The right lateral camera sensor 12RS is provided at a right side mirror, and images a right lateral region of the own vehicle. The left lateral camera sensor 12LS is provided at a left side mirror, and images a left lateral region of the own vehicle. The rear camera sensor 12R is provided at a rear center part of the vehicle body, and images the rear region of the own vehicle. The front camera sensor 12F images the front region at two different angles of view (144° and 180° in the present embodiment). Similarly, the rear camera sensor 12R images the rear region at two different angles of view (144° and 180° in the present embodiment). FIG. 3 shows imaging ranges of when the front camera sensor 12F images the front region at two different angles of view. A range S1 shows an imaging range of when the front region is imaged in a wide angle of view and a range S2 shows an imaging range of when the front region is imaged in a narrow angle of view. As shown in FIG. 3, the range S1 is wider than the range S2 in a left and right direction. Therefore, an image taken in the wide angle of view has a wider display range in the left and right direction than an image taken in the narrow angle of view.

Hereinafter, image data acquired by the camera sensors 12F, 12RS, 12LS, 12R are referred to as a "front image data", a "right lateral image data", a "left lateral image data", and a "rear image data", respectively. Besides, the front image data and the rear image data taken in the narrow angle of view are referred to as a "front image data in the narrow angle of view" and a "rear image data in the narrow angle of view", respectively. Similarly, the front image data and the rear image data taken in the wide angle of view are referred to as a "front image data in the wide angle of view" and a "rear image data in the wide angle of view", respectively. These image data acquired by each of the camera sensors 12F, 12RS, 12LS, 12R are transmitted to the DSECU 10.

The DSECU 10 composite the front image data in the wide angle of view, the right lateral image data, the left lateral image data, and the rear image data in the wide angle of view, as well as a plane image of the vehicle (an image of the vehicle in a plan view) stored in the ROM of the DSECU in advance at the same display magnification (reduction scale) to generate a bird's-eye view image. Here, the bird's-eye view image means an image of the own vehicle and a surrounding region thereof which appears to be seen from a bird's-eye view (from the above), and does not mean an image actually seen from the bird's-eye view. The DSECU 10 displays, under a predetermined condition, this bird's-eye view image on the touch panel 63 (described later) connected to the navigation ECU 60. It should be noted that when generating the bird's-eye view image, the front image data in the narrow angle of view and the rear image data in the narrow angle of view may be used in place of the front image data in the wide angle of view and the rear image data in the wide angle of view.

In addition, the DSECU 10 generates, based on the front image data and the rear image data, a traveling direction image indicating a region in a traveling direction of the own vehicle. Specifically, when the own vehicle is traveling forward or has stopped while traveling forward (that is, when a shift position of a shift lever detected by the shift position sensor 13 is D or N), the DSECU 10 generates, based on the front image data, the traveling direction image indicating the front region of the own vehicle. This traveling direction image is generated for each angle of view. Hereinafter, a traveling direction image generated based on the front image data in the narrow angle of view is referred to as a "front traveling direction image in a narrow angle of view", and a traveling direction image generated based on the front image data in the wide angle of view is referred to as a "front traveling direction image in a wide angle of view".

On the other hand, when the own vehicle is traveling backward or has stopped while traveling backward (that is, when the shift position of the shift lever is R), the DSECU 10 generates, based on the rear image data, a traveling direction image indicating the rear region of the own vehicle. This traveling direction image is generated for each angle of view. Hereinafter, a traveling direction image generated based on the rear image data in the narrow angle of view is referred to as a "rear traveling direction image in a narrow angle of view", and a traveling direction image generated based on the rear image data in the wide angle of view is referred to as a "rear traveling direction image in a wide angle of view". The DSECU 10 displays on the touch panel 63, under a predetermined condition, one of these traveling direction images, depending on a driving state of the own vehicle (described later).

Further, the DSECU 10 generates, based on the right lateral image data, a right lateral image indicating the right lateral region of the own vehicle, and generates, based on the left lateral image data, a left lateral image indicating the left lateral region of the own vehicle. The DSECU 10 displays on the touch panel 63, under a predetermined condition, these images as "lateral images on both sides" (described later).

Further, the DSECU 10 analyzes the image data acquired by the camera sensors 12 to recognize a mark line which is a line dividing a parking allowed region. The DSECU 10 superimposes this mark line on the bird's-eye view image and the traveling direction image (described later).

Referring back to FIG. 1, the shift position sensor 13 detects a shift position of the non-illustrated shift lever and outputs to the DSECU 10 a signal indicating the detected shift position. The DSECU 10 acquires the shift position based on the signal received from the shift position sensor 13. It should be noted that the own vehicle is equipped with a non-illustrated known auto transmission. As already known, when a shift position of the shift lever is moved to a P range, the auto transmission is set to be in a state where the auto transmission is mechanically impossible to rotate, which enables the vehicle to maintain a stop state.

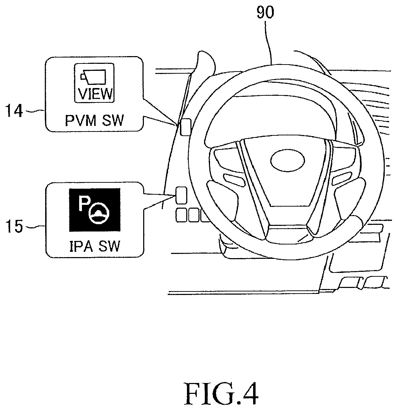

As shown in FIG. 4, the PVM switch 14 is arranged in the vicinity of a steering wheel 90 and is operated by the driver. The PVM switch 14 is a switch pressed for a purpose of switching a display mode of an image displayed on the touch panel 63 to a PVM mode. Here, PVM is a known function to assist (support) the driver's driving by displaying the surrounding region of the own vehicle on the display screen (the touch panel 63 in the present embodiment) when the own vehicle is traveling at a relatively low speed (a speed less than or equal to 12 [km/h], for instance) by the driving operation by the driver. The PVM mode is a display mode of when the PVM function is in operation. When the PVM switch 14 is pressed, a PVM pressed signal is transmitted to the DSECU 10. The DSECU 10 sets a display mode of an image displayed on the touch panel 63 to the PVM mode when receiving the PVM pressed signal. It should be noted that the PVM mode includes a plurality of display patterns, depending on the shift position and the number of times that the PVM switch 14 is pressed (described later). The PVM mode corresponds to one example of a "first mode".

As shown in FIG. 4, the IPA switch 15 is arranged in the vicinity of a steering wheel 90 and is operated by the driver. The IPA switch 15 is a switch pressed when starting a performance of a parking assist control. Here, the parking assist control is a known control to assist the driver in a parking operation (or an operation to leave a parking space) by automatically steering the steering wheel when parking the own vehicle or leaving the parking space. When the IPA switch 15 is pressed, an IPA pressed signal is transmitted to the DSECU 10. The DSECU 10 sets a display mode of an image displayed on the touch panel 63 to an IPA mode (that is, a display mode displayed during a performance of the parking assist control) when receiving the IPA pressed signal from the IPA switch 15. Hereinafter, the parking assist control is also referred to as "IPA". It should be noted that the IPA mode includes a plurality of display patterns, depending on the shift position and the number of times that the IPA switch 15 is pressed (described later). The IPA mode corresponds to one example of a "second mode".

The speaker 16 generates a voice when receiving an utterance instruction from the DSECU 10. When a message for assisting the driver's driving is displayed on the touch panel 63, the DSECU 10 makes the speaker 16 utter this message.

The buzzer 17 sounds when receiving a sounding buzzer signal from the DSECU 10. The DSECU 10 sounds the buzzer 17 when notifying the driver of a driving assist state (for example, when urging the driver to stop the own vehicle during a performance of the IPA), when warning (alerting) the driver, and so on.

The electric power steering ECU 20 is a control apparatus of an electric power steering apparatus. Hereinafter, the electric power steering ECU 20 is referred to as an EPS·ECU (Electric Power Steering ECU) 20. The EPS·ECU 20 is connected to a motor driver 21. The motor driver 21 is connected to a steered motor 22. The steered motor 22 is incorporated into a non-illustrated steering mechanism of the vehicle including "the steering wheel, a steering shaft coupled to the steering wheel, a steering gear mechanism, and the like". The EPS·ECU 20 detects a steering torque which the driver input to the steering wheel 90 (refer to FIG. 4) by using a steering torque sensor arranged at a steering shaft. The EPS·ECU 20 controls an electric conduction of the motor driver 21 based on the detected steering torque and drives the steered motor 22. When the steered motor 22 is driven, a steered angle of a non-illustrated steered wheel of the own vehicle is changed (the steered wheel is steered). A steering torque is applied to the steering mechanism by driving this assisting motor, assisting the driver in the steering operation.

Besides, when the EPS·ECU 20 receives a steering instruction from the DSECU 10 via the CAN 100 during a performance of the IPA, the EPS·ECU 20 drives the steered motor 22 with a control amount specified by the steering instruction to generate a steering torque. This steering torque is different from the steering assist torque applied in order to lighten the aforementioned steering operation (a steering wheel operation) by the driver, but is applied to the steering mechanism by the steering instruction from the DSECU 10 without the steering operation by the driver. This torque changes the steered angle of the steered wheel of the own vehicle (the steered wheel is steered).

It should be noted that when a steering torque by a steering wheel operation by the driver is detected and this steering torque is larger than a threshold, even when the EPS·ECU 20 receives a steering instruction from the DSECU 10 during a performance of the IPA, the EPS·ECU 20 prioritizes the steering wheel operation by the driver and generates the steering assist torque to lighten this operation.

The meter ECU 30 is connected to an indicator 31. The indicator 31 is, for example, a multi information display provided at a front of a driver's seat and indicates various types of information in addition to measured values such as a vehicle speed and the like by a meter. For instance, when receiving an indication instruction corresponding to a driving assist state from the DSECU 10, the meter ECU 30 indicates on the indicator 31 an image designated by the indication instruction. It should be noted that a head-up display (illustration omitted) may be adopted as the indicator 31 in place of or in addition to the multi information display.

The engine ECU 40 is connected to an engine actuator 41. The engine actuator 41 includes actuators to change a driving state of an internal combustion engine 42. The engine ECU 40 drives the engine actuator 41 to change torque which the internal combustion engine 42 generates. Thereby, the engine ECU 40 can control a driving force of the own vehicle to change an acceleration state (an acceleration rate).

The brake ECU 50 is connected to a brake actuator 51. The brake actuator 51 adjusts, in response to an instruction from the brake ECU 50, a hydraulic pressure that is supplied to a wheel cylinder which is built in the brake caliper 52b. Thereby, the brake actuator 51 presses a brake pad onto the brake disc 52a to generate a friction braking force. Accordingly, the brake ECU 50 can control a braking force of the own vehicle to change a deceleration state (a deceleration rate) by controlling the brake actuator 51.

The navigation ECU 60 is connected to a GPS receiver 61, a map database 62, a touch panel (a touch-screen display) 63, and so on. The GPS receiver 61 receives a GPS signal to detect a current position of the own vehicle. The map database 62 stores map information etc. The navigation ECU 60 identifies a position of the own vehicle at a current point in time based on the GPS signal, and performs various types of processing based on an own vehicle position and on the map information etc. stored in the map database 62 to display on the touch panel 63 a current position of the own vehicle on the map. Hereinafter, a display mode of when the current position of the own vehicle on the map is displayed on the touch panel 63 is referred to as a "navigation mode".

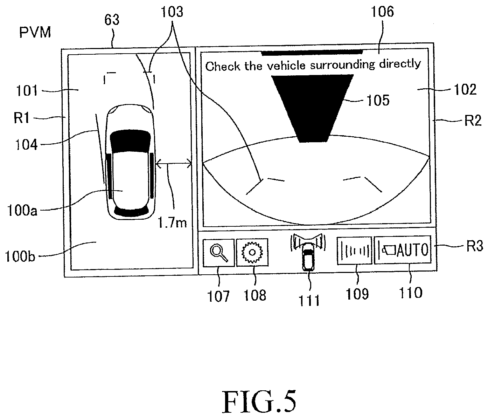

Display modes of images displayed on the touch panel 63 includes the aforementioned PVM mode and the IPA mode other than the navigation mode. A home button (illustration omitted) is provided in the vicinity of the touch panel 63. When a display mode is either the PVM mode or the IPA mode, the display mode is switched to the navigation mode by pressing the home button. As stated earlier, the PVM and the IPA are known technique. Therefore, in the following description, a simple description will be made for known matters whereas a detailed description will be made for new matters, referring to FIG. 5 to FIG. 8.

### <PVM mode>

FIG. 5 shows one example of a display pattern of when the PVM mode is selected as a display mode. This display pattern is displayed when the PVM switch 14 is pressed once with the shift position being D or N. In this example, a bird's-eye view image 101, a traveling direction image 102, various types of switches 107 to 110, and a vehicle mark 111 are displayed on the touch panel 63.

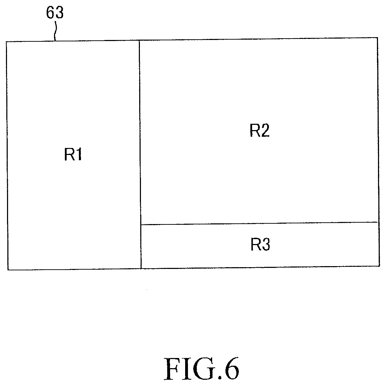

FIG. 6 shows the touch panel 63 (hereinafter, simply referred to as a "screen") divided into three areas R1, R2, and R3. The area R1 is a left side area among two areas formed by dividing the screen into left and right areas, and has a vertically long rectangular shape. The area R2 is an upper side area among two areas formed by further dividing a right side area among the aforementioned two areas into upper and lower areas, and has a horizontally long rectangular shape. The area R3 is a lower side area among two areas formed by further dividing the right side area into upper and lower areas, and has a horizontally long rectangular shape. The areas R1 to R3 are formed by dividing the screen in such a manner that the area R2 is the largest and the area R3 is the smallest.

As shown in FIG. 5, the bird's-eye view image 101 is displayed in almost the whole part of the area R1, the traveling direction image 102 is displayed in almost the whole part of the area R2, and each of the switches 107 to 110 and the vehicle mark 111 are displayed in the area R3 side by side in a horizontal direction. When both of the bird's-eye view image and the traveling direction image are displayed on the touch panel 63 as shown in FIG. 5, a size of each area R1 to R3 (refer to FIG. 6) is kept as a predetermined size regardless of the types of the display modes (that is, the PVM mode and the IPA mode) or the types of the display pattern (that is, the display pattern of when traveling forward and the display pattern of when traveling backward). It should be noted that the bird's-eye view image 101 corresponds to one example of a "first bird's-eye view image" and the traveling direction image 102 corresponds to one example of a "first another image". Besides, the area R1 and the area R2 correspond to one example of a "first display area" and a "second display area", respectively.

The bird's-eye view image 101 is an image composed of a vehicle 100a and a surrounding region 100b thereof. The vehicle 100a is positioned in a center of the bird's-eye view image 101. In the bird's-eye view image 101, a range from a lateral edge part of a vehicle body of the vehicle 100a to a position separated from this lateral edge part by 1.7 [m] in a vehicle outward direction is displayed as the surrounding region 100b. In the surrounding region 100b, a front distance reference line 103 and a forward expected route line 104 are displayed. The front distance reference line 103 is a line indicating approximately one meter ahead from a front edge of a front bumper (illustration omitted) of the own vehicle, and is shown in blue. The forward expected route line 104 is a line indicating a reference route by working with the steering wheel operation by the driver, and is shown in yellow. Each of these lines 103 and 104 is one type of a guide line.

In the traveling direction image 102, the front distance reference line 103 and a message 106 are displayed. It should be noted that the driver may feel strange if a part of a front range of the vehicle is displayed in the traveling direction image 102 because a distance in that part may be displayed in a distorted manner, and therefore that part is hidden with a masking 105. The message 106 is a message for alerting the driver depending on a driving situation of the own vehicle. In this example, a message of "Check the vehicle surrounding directly" is displayed. This message is also uttered by the speaker 16.

The switch 107 is a switch for describing a magnification function. When this switch 107 is selected, a window for describing the magnification function for the bird's-eye view image 101 is displayed. It should be noted that the magnification function is a known function to display a part of the bird's-eye view image 101 selected by the driver in a magnified manner in the area R1.

The switch 108 is a setting switch. When this switch 108 is selected, a window for switching display modes of the guide lines and for setting a left and right confirmation support (described later) is displayed.

The switch 109 is a tentative on/off switch for the left and right confirmation support. When this switch 109 is selected, on and off of the left and right confirmation support is tentatively switched. Here, the left and right confirmation support is a known function to sound the buzzer 17 for warning and to display an approaching direction of an obstacle (a pedestrian, a bicycle, a vehicle, or the like) on the bird's-eye view image 101 and on the traveling direction image 102, and thereby to support a driver's safety confirmation in a case when the obstacle passing the front or the rear region of the own vehicle is detected by the surrounding sensors 11 when starting from a parking lot or a blind place. During a period in which the left and right confirmation support is being turned on, an operation indicator (a vertical line on a left side of a mark in the switch 109) blinks.

The switch 110 is an automatic display mode switching switch. When this switch 110 is selected, on and off of an automatic display mode is switched. Here, the automatic display mode is a known function where the bird's-eye view image 101 and the traveling direction image 102 are automatically displayed on the screen when the following two conditions are satisfied even though the PVM switch 14 is not pressed, the two conditions being that a shift position has been switched to D or N and that a vehicle speed has decreased to less than or equal to a predetermined first vehicle speed (10 [km/h], for example). During a period in which the automatic display mode is being turned on, an operation indicator (a vertical line on a left side of a mark in the switch 110) blinks.

The vehicle mark 111 is a mark indicating which direction (a left, a right, a forward, or a backward direction of the own vehicle) of an area is displayed on the traveling direction image 102. In this example, the front region of the own vehicle is displayed on the traveling direction image 102 and therefore the vehicle mark 111 has a display area positioned in front of the vehicle. It should be noted that the same mark as the mark in the switch 109 is displayed on the display area part of the vehicle mark 111 in a superimposed manner. This mark indicates whether or not the left and right confirmation support is operatable, and is displayed in a form shown in FIG. 5 when operatable and is displayed in a form where a diagonal line is added on the mark (illustration omitted) when non-operatable.

When the PVM mode is selected as a display mode, the DSECU 10 sets a display magnification of the vehicle 100a in the bird's-eye view image 101 higher than a display magnification at the IPA mode. Since the size of the area R1 in which the bird's-eye view image 101 is displayed is fixed, a higher display magnification of the vehicle 100a leads to a narrower display range of the surrounding region 100b. That is, when the PVM mode is selected as the display mode, the surrounding region 100b in the bird's-eye view image 101 is displayed in a narrow display range.

In addition, when the PVM mode is selected as a display mode, the DSECU 10 uses an image in a wide angle of view as the traveling direction image 102. That is, when traveling forward, the "front traveling direction image in a wide angle of view" is used as the traveling direction image 102, and when traveling backward (described later), the "rear traveling direction image in a wide angle of view" is used as the traveling direction image 102.

The above is a description about the display pattern displayed on the screen when the PVM switch is pressed once with the shift position being D or N. It should be noted that when the PVM switch 14 is pressed twice with the shift position being D or N, a display pattern is switched to a pattern (illustration omitted) where the aforementioned "lateral images on both sides" are displayed. This display pattern is useful as a driving support in a case when a safety confirmation at a lateral side (lateral sides) of the own vehicle is performed or in a case when the vehicle tries to avoid contacting with a building on a road with a narrow width. Besides, when the PVM switch 14 is pressed three times with the shift position being D or N, a display mode itself is switched to the navigation mode.

On the other hand, when the PVM switch 14 is pressed once with the shift position being R, either one of following three types of display patterns (illustration omitted) is displayed on the screen. That is, in a first display pattern, both of the bird's-eye view image and the traveling direction image are displayed. A surrounding region in this bird's-eye view image is displayed in a narrow display range as is the case with the above example. Besides, the "rear traveling direction image in a wide angle of view" is used as this traveling direction image. It should be noted that the bird's-eye view image is displayed in the area R1 (refer to FIG. 6) and the traveling direction image is displayed in the area R2 (refer to FIG. 6). That is, a size of an area in which the bird's-eye view image is displayed (that is, the area R1) and a size of an area in which the traveling direction image is displayed (that is, the area R2) remain unchanged (are fixed) even when a display pattern is switched to another. In a second or a third display pattern, the traveling direction image alone is displayed on almost the whole part of the screen. They are different from each other in that in the second display pattern, the "rear traveling direction image in a narrow angle of view" is used whereas in the third display pattern, the "rear traveling direction image in a wide angle of view" is used. These three display patterns can be switched to one another by the driver selecting a predetermined vehicle mark (illustration omitted) on the screen.

### <IPA mode>

The IPA (parking assist control) assists three types of parking and leaving a parking space, that is, a side-by-side parking, a parallel parking, and a leaving a parallel parking space. In a case of the shift position being D or N and the vehicle speed being less than or equal to a predetermined second vehicle speed (30 [km/h], for instance), a display pattern is switched to a pattern for assisting the side-by-side parking when the IPA switch 15 is pressed once, a display pattern is switched to a pattern for assisting the parallel parking when the IPA switch 15 is pressed twice, and a display mode itself is switched to the navigation mode when the IPA switch 15 is pressed three times. On the other hand, in a case of the shift position being P, a display pattern is switched to a pattern for assisting the leaving a parallel parking space when the IPA switch 15 is pressed once, and a display mode itself is switched to the navigation mode when the IPA switch 15 is pressed twice.

Although controls to assist the parallel parking and the leaving a parallel parking space differ from controls to assist the side-by-side parking in control processing, display patterns displayed on the screen are approximately the same with each other. Therefore, in the present specification, a description about a display mode of when assisting the side-by-side parking will be made, and a description about display modes of when assisting the parallel parking and the leaving the parallel parking space will be omitted.

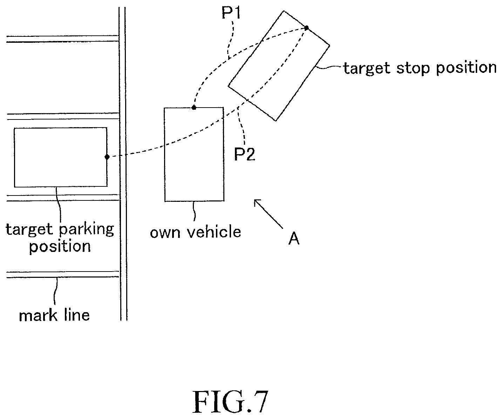

Prior to a description about the display mode of when assisting the side-by-side parking, a summary of the IPA (hereinafter, also referred to as a "side-by-side parking assist control") of when performing the side-by-side parking will be described, referring to FIG. 7. The side-by-side parking assist control is started by the driver pressing the IPA switch 15 once with the shift position kept in D or N after the driver brings the own vehicle alongside a target parking position and tentatively stops the own vehicle (refer to a position shown by an arrow A in FIG. 7).

When the side-by-side parking assist control is started, the DSECU 10 recognizes mark lines, determines a target parking position out of a region divided by the mark lines, and determines a target stop position based on this target parking position. Thereafter, the DSECU 10 calculates a first path P1 and a second path P2 where the first path P1 is a path along which the own vehicle travels forward (advances) from a current position of the own vehicle to the target stop position, and the second path P2 is a path along which the own vehicle travels backward from the target stop position to the target parking position.

When the driver travels forward from the current position with his/her hand(s) lightly holding the steering wheel in such a manner that a vehicle speed does not exceed a predetermined third vehicle speed (7 [km/h], for example), the DSECU 10 calculates, based on the vehicle speed, a steering control amount required for the own vehicle to travel forward along the first path P1, and based on this steering control amount, automatically steers the steering wheel 90 (refer to FIG. 4). When the own vehicle approaches the target stop position, the driver is informed that the own vehicle will soon reach the target stop position with the buzzer 17, a message on the screen and the like, and thereby the driver depresses the brake pedal to stop at the target stop position.

When the driver switches the shift lever to an R range, selects an okay button (illustration omitted) on the screen, and travels backward from the target stop position in such a manner that an absolute value of the vehicle speed does not exceed the aforementioned third vehicle speed, the DSECU 10 calculates, based on the vehicle speed, a steering control amount required for the own vehicle to travel backward along the second path P2, and automatically steers the steering wheel 90 (refer to FIG. 4) based on this steering control amount. When the own vehicle approaches the target parking position, the driver is informed that the own vehicle will soon reach the target parking position with the buzzer 17, a message on the screen, and the like, and the IPA finishes. After the IPA finishes, the driver depresses the brake pedal to stop at the target parking position.

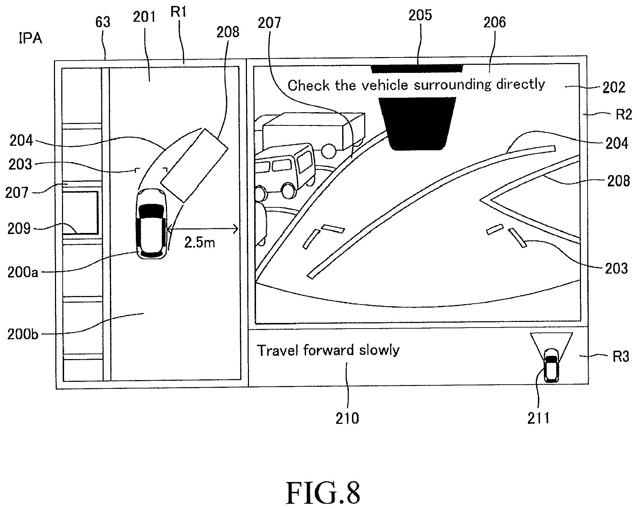

The above is a summary of the side-by-side parking assist control. Next, the display pattern of when assisting the side-by-side parking will be described, referring to FIG. 8. This display pattern is one example of display patterns displayed when the IPA mode is selected as a display mode. More specifically, this display pattern is displayed at a stage where the own vehicle travels forward to the target stop position (that is, travels forward along the first path P1) among a plurality of stages in the side-by-side parking assist control. In this example, a bird's-eye view image 201, a traveling direction image 202, a message 210, and a vehicle mark 211 are displayed on the touch panel 63. The bird's-eye view image 201 is displayed in the area R1, the traveling direction image 202 is displayed in the area R2, and the message 210 and the vehicle mark 211 are displayed in the area R3. That is, a size of an area in which the bird's-eye view image 201 is displayed (that is, the area R1) and a size of an area in which the traveling direction image 202 is displayed (that is, the area R2) remain unchanged (are fixed) even when a display mode is switched to another type of a display mode. It should be noted that the bird's-eye view image 201 and the traveling direction image 202 correspond to one example of a "second bird's-eye view image" and a "second another image", respectively.

The bird's-eye view image 201 is an image composed of a vehicle 200a and a surrounding region 200b thereof. The vehicle 200a is positioned in a center of the bird's-eye view image 201. In the bird's-eye view image 201, a range from both lateral surfaces of the vehicle 200a to a position separated from these lateral surfaces by 2.5 [m] in the vehicle outward direction is shown as the surrounding region 200b. That is, when the IPA mode is selected as a display mode, the surrounding region in the bird's-eye view image is displayed in a wider display range than when the PVM mode is selected.

In the surrounding region 200b, a front distance reference line 203, a forward expected route line 204, a mark like 207, a target stop position 208, and a target parking position 209 are displayed. The front distance reference line 203 is a line indicating approximately one meter ahead from the front edge of the front bumper (illustration omitted) of the own vehicle, and is shown in blue. The forward expected route line 204 is a line indicating a reference route by working with the steering wheel operation by the driver, and is shown in yellow. The mark line 207 is a line dividing a parking allowed region, and is shown in white. The target stop position 208 is a line, shown in blue, indicating a position toward which the own vehicle travels forward from the current position by the automatic steering by the IPA and at which the own vehicle is to tentatively stop. The target parking position 209 is a line, shown in blue, indicating a position toward which the own vehicle travels backward from the target stop position 208 by the automatic steering by the IPA and at which the own vehicle is to be parked side by side.

In the traveling direction image 202, the front distance reference line 203, the forward expected route line 204, a message 206, the mark line 207, and the target stop position 208 are displayed. It should be noted that a masking 205 plays the same role as the masking 105 at the PVM mode. The message 206 is a message for alerting the driver depending on a driving situation of the own vehicle. In this example, a message of "Check the vehicle surrounding directly" is displayed. This message is also uttered by the speaker 16.

The message 210 is a message indicating an advice on the driving operation performed by the driver. In this example, a message of "Travel forward slowly" is displayed. This message is uttered by the speaker 16 at a different timing from a timing when the aforementioned message 206 is uttered.

The vehicle mark 211 is a mark indicating which direction (a forward or a backward direction of the own vehicle) of an area is displayed in the traveling direction image 202. In this example, the front region of the own vehicle is displayed on the traveling direction image 202 and therefore the vehicle mark 211 has a display area positioned in front of the vehicle.

When the IPA mode is selected as a display mode, the DSECU 10 sets a display magnification of the vehicle 200a in the bird's-eye view image 201 lower than a display magnification at the PVM mode. Since the size of the area R1 in which the bird's-eye view image 201 is displayed is fixed, a lower display magnification of the vehicle 200a leads to a wider display range of the surrounding region 200b. That is, when the IPA mode is selected as the display mode, the surrounding region 200b in the bird's-eye view image 201 is displayed in a wide display range.

In addition, when the IPA mode is selected as a display mode, the DSECU 10 uses an image in a narrow angle of view as the traveling direction image 202. That is, when traveling forward, the "front traveling direction image in a narrow angle of view" is used as the traveling direction image 202, and when traveling backward (described later), the "rear traveling direction image in a narrow angle of view" is used as the traveling direction image 202.

The above is a description about the display pattern for the side-by-side parking assist control at a stage of traveling forward. It should be noted that when the shift position is switched from D or N to R at the target stop position 208, either one of following three types of display patterns (illustration omitted) is displayed on the screen. That is, in a first display pattern, both of the bird's-eye view image and the traveling direction image are displayed. A surrounding region in this bird's-eye view image is displayed in a wide display range as is the case with the above example. Besides, the "rear traveling direction image in a narrow angle of view" is used as this traveling direction image. In a second or a third display pattern, the traveling direction image alone is displayed on almost the whole part of the screen. They are different from each other in that in the second display pattern, the "rear traveling direction image in a narrow angle of view" is used whereas in the third display pattern, the "rear traveling direction image in a wide angle of view" is used. These three display patterns can be switched to one another by the driver selecting a predetermined vehicle mark (illustration omitted) on the screen.

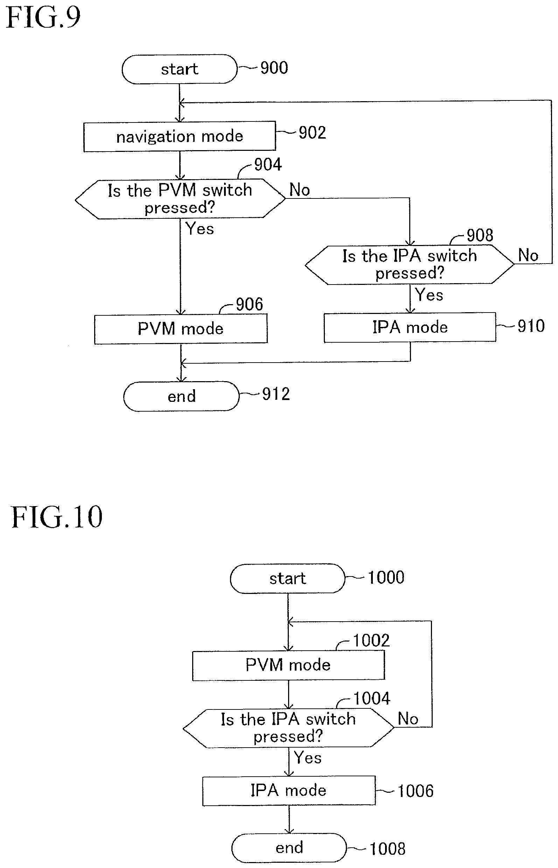

Next, a display mode switching processing performed by the DSECU 10 will be described, referring to FIG. 9. When an ignition switch is turned on, the DSECU 10 performs a routine shown by a flowchart in FIG. 9.

When the DSECU 10 starts processing from a step S900 in FIG. 9 after the ignition switch is turned on, the DSECU 10 sets, at a step S902, a display mode to the navigation mode. Thereby, an image showing a current position of the own vehicle on a map is displayed on the touch panel 63.

Subsequently, the DSECU 10 proceeds to a step S904 to determine whether or not the PVM switch 14 is pressed. When it is determined that the PVM switch 14 is pressed (S904: Yes), the DSESU 10 proceeds to a step S906 to switch the display mode to the PVM mode. Thereby, among a plurality of display patterns which the PVM mode includes, a display pattern corresponding to the shift position and the number of times that the PVM switch 14 is pressed is displayed on the touch panel 63. A display at the PVM mode is finished after a predetermined period (8 seconds, for example) elapses. In this case, the DSECU 10 proceeds to a step S912 to tentatively terminate the present routine. It should be noted that as stated earlier, when the number of times that the PVM switch 14 is pressed is a multiple of three, the display mode is exceptionally switched to the navigation mode.

In contrast, when it is determined that the PVM switch 14 is not pressed at the step S904 (S904: No), the DSECU 10 proceeds to a step S908 to determine whether or not the IPA switch 15 is pressed. When it is determined that the IPA switch 15 is not pressed (S908: No), the DSECU 10 returns to the step S902 to maintain the display mode at the navigation mode.

On the other hand, when it is determined that the IPA switch 15 is pressed at the step S908 (S908: Yes), the DSECU 10 proceeds to a step 910 to switch the display mode to the IPA mode. Thereby, among a plurality of display patterns which the IPA mode includes, a display pattern corresponding to the shift position and the number of times that the IPA switch 15 is pressed is displayed on the touch panel 63. It should be noted that even when it is determined at the step 908 that the IPA switch 15 is pressed, if the vehicle speed exceeds the predetermined third vehicle speed, the DSECU 10 makes a "No" determination at the step 908. A display at the IPA mode is finished at a point in time when the IPA has finished. In addition, the display at the IPA mode is finished (is interrupted) also when a condition for continuing the IPA is not satisfied (for example, when the steering torque exceeds a threshold by the driver operating the steering wheel 90, when the vehicle speed exceeds the predetermined third vehicle speed, or the like). In these cases, the DSECU 10 proceeds to the step S912 to tentatively terminate the present routine. It should be noted that as stated earlier, when the number of times that the IPA switch 15 is pressed is a multiple of three in a case of the shift position being D or N, and when the number of times that the IPA switch 15 is pressed is a multiple of two in a case of the shift position being P, the display mode is exceptionally switched to the navigation mode. The DSECU 10 repeats the above routine every time a predetermined calculation interval elapses until the ignition switch is turned off. It should be noted that in a case of the shift position being D or N, a configuration where the display mode is exceptionally switched to the navigation mode when the number of times that the IPA switch 15 is pressed is a multiple of two may be adopted.

Effects of the present embodiment apparatus will be described. The present embodiment apparatus fixes the size of the area R1 (the area in which the bird's-eye view image 101 or the bird's-eye view image 201 is displayed) and changes a display magnification in the bird's-eye view image between two different display modes of the PVM mode and the IPA mode, and thereby changes a display range of the surrounding region in the bird's-eye view image. According to this configuration, the size of the area R1 is prevented from being changed due to a change in the display range of the surrounding region in the bird's-eye view image, and therefore it is prevented that the size of the area R2 (the area where the traveling direction image 102 or the traveling direction image 202 is displayed) is changed. Therefore, the present embodiment apparatus can properly change the display range of the surrounding region in the bird's-eye view image between two different display modes while suitably displaying the traveling direction image.

Especially, the PVM is a function to assist the driver in driving at a relatively slow speed, and is used, for example, at a road with a narrow width or at a blind intersection. The display range of the surrounding region 100b in the bird's-eye view image 101 at the PVM mode is made to be narrower than the display range of the surrounding region 200b in the bird's-eye view image 201 at the IPA mode. This enables the surrounding region 100b to be displayed in a magnified manner compared to the surrounding region 200b since the size of the area R1 in which the bird's-eye view image 101 is displayed is fixed. Therefore, during a period when the PVM mode is selected as a display mode, it becomes easy for the driver to check a situation of the surrounding region near the own vehicle by referring to the bird's-eye view image 101. Hence, a possibility that the vehicle body makes a contact with a sidewall, an obstacle on a road, and the like when traveling on a road with a narrow width can be reduced.

In addition, a usage of a wide angle of view image as the traveling direction image 102 enables the driver to easily check a situation of a left and right region in the traveling direction by referring to the traveling direction image 102. Therefore, in a case of entering a blind intersection, it becomes possible to check whether or not an obstacle such as a pedestrian, a bicycle, and a vehicle is approaching from a left or a right side before entering the intersection, and thereby a possibility to make a contact with these obstacles can be reduced.

According to the effects as stated above, the bird's-eye view image 101 and the traveling direction image 102 can be displayed on the screen in a suitable display range for a traveling at a slow speed.

On the other hand, the IPA is a function to assist the driver in a parking operation (or an operation to leave a parking space) by automatically steering the steering wheel 90, and is used when parking the own vehicle (or leaving a parking space). The display range of the surrounding region 200b in the bird's-eye view image 201 at the IPA mode is made to be wider than the display range of the surrounding region 100b in the bird's-eye view image 101 at the PVM mode. This enables the target stop position 208 and/or the target parking position 209 to be easily displayed in the surrounding region 200b since the size of the area R1 in which the bird's-eye view image 201 is displayed is fixed. Therefore, during a period when the IPA is being performed (that is, a period where the IPA mode is selected as a display mode), the driver can check, by referring to the bird's-eye view image 201, the target stop position 208 and/or the target parking position 209, or whether or not there is an obstacle on the first path P1 and/or the second path P2. Thereby, the IPA can be immediately stopped by a driving operation by the driver when some obstacle is detected on the first path P1 or the second path P2.

In addition, since the size of the area R2 in which the traveling direction image 202 is displayed is fixed, a usage of a narrow angle of view image as the traveling direction image 202 enables the front region in the traveling direction to be displayed in a magnified manner in the traveling direction image 202 compared to the corresponding region in the traveling direction image 102 at the PVM mode. Therefore, during a period when the IPA is being performed, the driver can more easily confirm a process through which the vehicle travels by referring to the traveling direction image 202.

According to the effects as stated above, the bird's-eye view image 201 and the traveling direction image 202 can be displayed on the screen in a suitable display range for the IPA.

### (Modification example 1)

Next, a description about a vehicle surrounding display apparatus according to a modification example 1 of the embodiment of the present invention (hereinafter, also referred to as a "first modification apparatus") will be made, referring to FIG. 10. The present modification example differs from the above embodiment in that in the above embodiment, the PVM mode and the IPA mode are both switched from the navigation mode, whereas in the present modification example, the PVM mode and the IPA mode can be switched to each other without an intervention of the navigation mode.

When the ignition switch is turned on, the DSECU 10 performs a routine shown by a flowchart in FIG. 10. When the DSECU starts processing from a step S1000 after the ignition switch is turned on, the DSECU 10 sets, at a step S1002, a display mode to the PVM mode. Thereby, among a plurality of display patterns which the PVM mode includes, a display pattern corresponding to the shift position and the number of times that the PVM switch 14 is pressed is displayed on the touch panel 63.

Subsequently, the DSECU 10 proceeds to a step S1004 to determine whether or not the IPA switch 15 is pressed. When it is determined that the IPA switch 15 is not pressed (S1004: No), the DSECU 10 returns to the step S1002 to maintain the display mode at the PVM mode.

On the other hand, when it is determined that the IPA switch 15 is pressed at the step S1004 (S1004: Yes), the DSECU 10 proceeds to a step 1006 to switch the display mode to the IPA mode. Thereby, among a plurality of display patterns which the IPA mode includes, a display pattern corresponding to the shift position and the number of times that the IPA switch 15 is pressed is displayed on the touch panel 63. When the IPA finishes or when the condition for continuing the IPA is not satisfied, the DSECU 10 proceeds to a step S1008 to tentatively terminate the present routine. The DSECU 10 repeats the above routine every time the predetermined calculation interval elapses until the ignition switch is turned off.

It should be noted that when the home button is pressed during a performance of the aforementioned processing, the DSECU 10 switches the display mode to the navigation mode regardless of the processing content of the present routine.

According to the configuration of the first modification apparatus, similar effects to the present embodiment apparatus can be obtained.

### (Modification example 2)

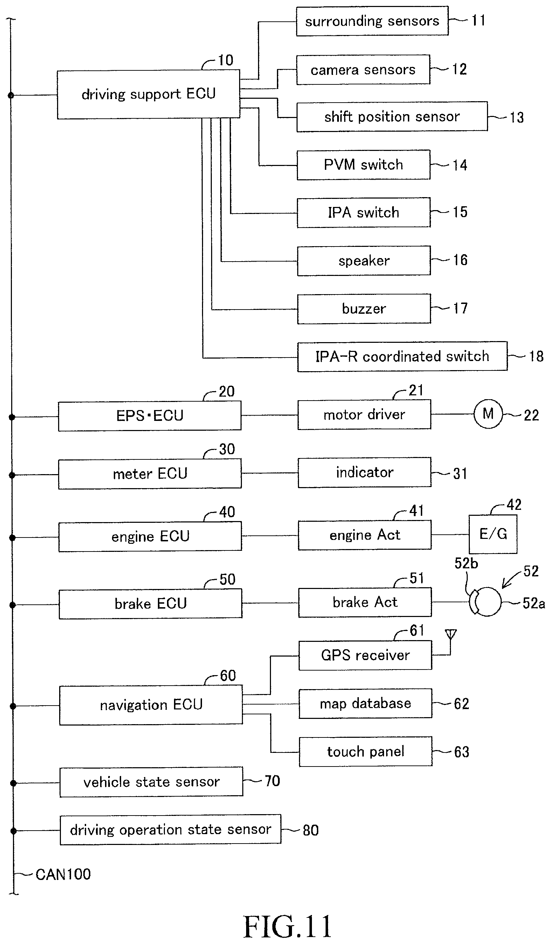

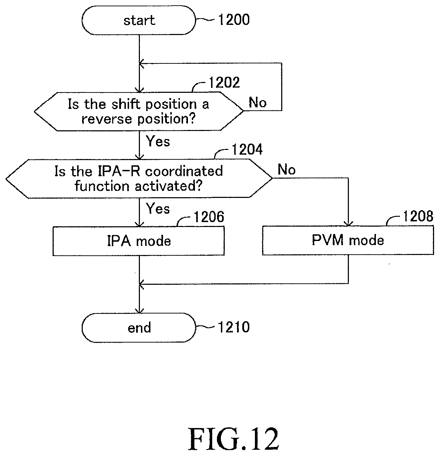

Next, a description about a vehicle surrounding display apparatus according to a modification example 2 of the embodiment of the present invention (hereinafter, also referred to as a "second modification apparatus") will be made, referring to FIG. 11 and FIG. 12. In the description below, the same reference numeral will be assigned to members having the same configuration as the members of the vehicle surrounding display apparatus according to the embodiment, and a detailed description for them will be omitted.

As shown in FIG. 11, the second modification apparatus has an IPA-R coordinated switch 18 connected to the DSECU 10, which is a difference from the present embodiment apparatus. The IPA-R coordinated switch 18 is arranged in the vicinity of the PVM switch 14 and the IPA switch 15. When the IPA-R coordinated switch 18 is pressed, the IPA-R coordinated function is activated. When the driver stops the own vehicle in front of the target parking position and moves the shift lever to the R range after the IPA-R coordinated function is activated, the IPA is started in response to the moving of the shift lever even when the IPA switch 15 is not pressed. At this time, a plurality of target parking position candidates are displayed on the touch panel 63. That is, the DSECU 10 always (in other words, even when the IPA switch 15 is not pressed) recognizes mark lines and detects the target parking position candidates based on the image data acquired from the camera sensors 12. When the driver operates the steering wheel 90 to select a desired target parking position, the DSECU 10 thereafter calculates a target path (that is, a second path P2) from the current position of the own vehicle to the target parking position selected, and automatically steers the steering wheel 90 so that the own vehicle travels backward along this target path.

Next, a display mode switching processing performed by the DSECU 10 will be described, referring to FIG. 12. When the ignition switch is turned on, the DSECU 10 performs a routine shown by a flowchart in FIG. 12.

When the DSECU 10 starts processing from a step S1200 in FIG. 12 after the ignition switch is turned on, the DSECU 10 determines, at a step 1202, whether or not the shift position is R. When it is determined that the shift position is not R (S1202: No), the DSECU 10 again performs the processing of the step S1202. The DSECU 10 repeats the processing above until it is determined that the shift position is R.

When it is determined that the shift position is R (S1202: Yes) in the midst of repeating the processing above, the DSECU 10 proceeds to a step S1204 to determine whether or not the IPA-R coordinated switch 18 is pressed and the IPA-R coordinated function is activated. When it is determined that the IPA-R coordinated function is activated (S1204: Yes), the DSECU 10 proceeds to a step S1206 to set a display mode to the IPA mode. Thereby, among a plurality of display patterns which the IPA mode includes, a display pattern corresponding to the shift position and the number of times that the IPA switch 15 is pressed is displayed on the touch panel 63. When the IPA finishes or when the condition for continuing the IPA is not satisfied, the DSECU 10 proceeds to a step S1210 to tentatively terminate the present routine.

On the other hand, when it is determined that the IPA-R coordinated function is not activated at the step S1204 (S1204: No), the DSECU 10 proceeds to a step S1208 to set the display mode to the PVM mode. Thereby, among a plurality of display patterns which the PVM mode includes, a display pattern corresponding to the shift position and the number of times that the PVM switch 14 is pressed is displayed on the touch panel 63. Specifically, when the IPA-R coordinated function is not activated in case of the shift position being R, the DSECU 10 automatically sets the display mode to the PVM mode, not the navigation mode. Thereby, either image at the IPA mode or the PVM mode is displayed on the touch panel 63 when the vehicle travels backward (that is, when the shift position is R), and therefore the DSECU 10 can assist the driver in the driving operation.

When a display at the PVM mode is finished, the DSECU 10 proceeds to the step S1210 to tentatively terminate the present routine. The DSECU 10 repeats the above routine every time the predetermined calculation interval elapses until the ignition switch is turned off. It should be noted that in this routine, as long as the IPA-R coordinated switch 18 has been pressed, the IPA is started by shifting the shift lever to the R range also when the vehicle travels backward for a purpose of other than parking. In this case, although a plurality of the target parking position candidates are displayed on the touch panel 63 as stated above, the IPA mode is automatically terminated by the driver continuing a driving operation without selecting a target parking position. The DSECU 10 sets the PVM mode as a display mode when the shift position is R at a point in time when the IPA mode has been finished, and sets the navigation mode as a display mode when the shift position is D or N at a point in time when the IPA mode has been finished.

According to the configuration of the second modification apparatus, similar effects to the present embodiment apparatus can be obtained.

The vehicle surrounding display apparatuses according to the present embodiment and the modification examples have been described. However, the present invention is not limited to the aforementioned embodiment and may adopt various modifications within the scope of the appended claims.

## Claims

1. A vehicle surrounding display apparatus applied to a vehicle comprising;
an imaging means (12) for taking an image of a surrounding of said vehicle;
a display means including a display screen (63) with a predetermined size;
a display control means for displaying images on said display screen (63), each of said images corresponding to each of a plurality of display modes; and
a parking assist control means for performing a parking assist control which determines a target parking position of said vehicle, calculates a target path from a current position to said target parking position, and moves said vehicle along said target path,
wherein said display control means is configured to:
set said display mode to a first mode when said parking assist control is not being performed;
set said display mode to a second mode when said parking assist control is being performed;
when said first mode is selected as said display mode,
generate a first bird's-eye view image (101) based on said taken image, said first bird's-eye view image (101) being an image of said vehicle (100a) and a first surrounding region (100b) of said vehicle (100a) seen from a bird's-eye view to display said generated first bird's-eye view image (101) in a first display area with a fixed size on said display screen (63); and
generate a first another image (102) different from said first bird's-eye view image (101) based on said taken image to display said generated first another image (102) in a second display area with a fixed size on said display screen (63), and
when said second mode is selected as said display mode,
generate a second bird's-eye view image (201) based on said taken image, said second bird's-eye view image (201) being an image of said vehicle (200a) and a second surrounding region (200b) of said vehicle (200a) wider than said first surrounding region (100b) seen from a bird's-eye view to display said generated second bird's-eye view image (201) in said first display area; and
generate a second another image (202) different from said second bird's-eye view image (201) based on said taken image to display said generated second another image (202) in said second display area.

2. The vehicle surrounding display apparatus according to claim 1, wherein,
said first another image (102) and said second another image (202) are traveling direction images which are images including a region in a traveling direction of said vehicle, and
said display control means is configured to narrow an angle of view of said second another image (202) compared with an angle of view of said first another image (102).

3. The vehicle surrounding display apparatus according to claim 1 or claim 2, wherein,
said parking assist control means is configured to determine a target stop position where said vehicle tentatively stops in order to switch a traveling direction from forward to backward,
said target path includes a first path along which said vehicle travels forward from said current position to said target stop position and a second path along which said vehicle travels backward from said target stop position to said target parking position, and
said display control means is configured, when said second mode is selected as said display mode, to display both of said target stop position and said target parking position in said second bird's-eye view image (201) at least until said vehicle reaches said target stop position from said current position.

## Patentansprüche

1. Fahrzeugumgebungsanzeigevorrichtung, die an einem Fahrzeug angebracht ist und Folgendes umfasst:
ein Abbildungsmittel (12) zum Aufnehmen eines Bildes einer Umgebung des Fahrzeugs;
ein Anzeigemittel, das einen Anzeigebildschirm (63) mit einer vorbestimmten Größe umfasst;
ein Anzeigesteuermittel zum Anzeigen von Bildern auf dem Anzeigebildschirm (63), wobei jedes der Bilder einem von mehreren Anzeigemodi entspricht; und
ein Parkassistenzsteuermittel zum Durchführen einer Parkassistenzsteuerung, die eine Zielparkposition des Fahrzeugs bestimmt, einen Zielpfad von einer aktuellen Position zur Zielparkposition berechnet und das Fahrzeug entlang des Zielpfads bewegt,
wobei das Anzeigesteuermittel für Folgendes konfiguriert ist:
Einstellen des Anzeigemodus auf einen ersten Modus, wenn die Parkassistenzsteuerung nicht ausgeführt wird;
Einstellen des Anzeigemodus auf einen zweiten Modus, wenn die Parkassistenzsteuerung ausgeführt wird;
wenn der erste Modus als Anzeigemodus ausgewählt ist,
Erzeugen eines ersten Bildes (101) aus der Vogelperspektive basierend auf dem aufgenommenen Bild, wobei das erste Bild (101) aus der Vogelperspektive ein Bild des Fahrzeugs (100a) und ein erster umgebender Bereich (100b) des Fahrzeugs (100a) ist, gesehen aus der Vogelperspektive, um das erzeugte erste Bild aus der Vogelperspektive (101) in einem ersten Anzeigebereich mit einer festen Größe auf dem Bildschirm (63) anzuzeigen; und
Erzeugen eines ersten anderen Bildes (102), das sich von dem ersten Bild aus der Vogelperspektive (101) unterscheidet, basierend auf dem aufgenommenen Bild, um das zuerst erzeugte andere Bild (102) in einem zweiten Anzeigebereich mit einer festen Größe auf dem Anzeigebildschirm (63) anzuzeigen, und
wenn der zweite Modus als Anzeigemodus ausgewählt ist,
Erzeugen eines zweiten Bildes (201) aus der Vogelperspektive basierend auf dem aufgenommenen Bild, wobei das zweite Bild aus der Vogelperspektive (201) ein Bild des Fahrzeugs (200a) und eines zweiten umgebenden Bereichs (200b) des Fahrzeugs (200a) ist, der breiter ist als der erste umgebende Bereich (100b), gesehen aus der Vogelperspektive, um das erzeugte zweite Bild aus der Vogelperspektive (201) im ersten Anzeigebereich anzuzeigen; und
Erzeugen eines zweiten anderen Bildes (202), das sich vom zweiten Bild aus der Vogelperspektive (201) unterscheidet, basierend auf dem aufgenommenen Bild, um die erzeugte Sekunde eines anderen Bildes (202) in dem zweiten Anzeigebereich anzuzeigen.

2. Fahrzeugumgebungsanzeigevorrichtung nach Anspruch 1, wobei
das erste andere Bild (102) und das zweite andere Bild (202) Bilder in Fahrtrichtung sind, die Bilder sind, die einen Bereich in Fahrtrichtung des Fahrzeugs enthalten, und
die Anzeigesteuereinrichtung dafür konfiguriert ist, einen Blickwinkel des zweiten anderen Bildes (202) im Vergleich zu einem Blickwinkel des ersten anderen Bildes (102) zu verengen.

3. Fahrzeugumgebungsanzeigevorrichtung nach Anspruch 1 oder Anspruch 2, wobei
das Parkassistenzsteuermittel dafür konfiguriert ist, eine Zielstoppposition zu bestimmen, an der das Fahrzeug vorläufig anhält, um eine Fahrtrichtung von vorwärts nach rückwärts zu wechseln,
der Zielpfad Folgendes umfasst: einen ersten Pfad, auf dem das Fahrzeug von der aktuellen Position zur Zielstoppposition vorwärts fährt, und einen zweiten Pfad, auf dem das Fahrzeug von der Zielstoppposition zur Zielparkposition rückwärts fährt, und
das Anzeigesteuermittel dafür konfiguriert ist, wenn der zweite Modus als Anzeigemodus ausgewählt ist, sowohl die Zielstoppposition als auch die Zielparkposition in dem zweiten Bild (201) aus der Vogelperspektive zumindest solange anzuzeigen, bis das Fahrzeug die Zielstoppposition von der aktuellen Position erreicht.

## Revendications

1. Appareil d'affichage de l'environnement d'un véhicule appliqué à un véhicule comprenant :
un moyen d'imagerie (12) pour prendre une image d'un environnement dudit véhicule ;
un moyen d'affichage comprenant un écran d'affichage (63) avec une taille prédéterminée ;
un moyen de commande d'affichage pour afficher des images sur ledit écran d'affichage (63), chacune desdites images correspondant à chacun d'une pluralité de modes d'affichage ; et
un moyen de commande d'aide au stationnement pour exécuter une commande d'aide au stationnement qui détermine une position de stationnement cible dudit véhicule, calcule un chemin cible à partir d'une position actuelle à ladite position de stationnement cible, et déplace ledit véhicule le long dudit chemin cible,
dans lequel ledit moyen de commande d'affichage est configuré pour :
régler ledit mode d'affichage à un premier mode lorsque ladite commande d'aide au stationnement n'est pas en cours d'exécution ;
régler ledit mode d'affichage à un second mode lorsque ladite commande d'aide au stationnement est en cours d'exécution ;
lorsque ledit premier mode est sélectionné comme étant ledit mode d'affichage,
générer une première image de vue à vol d'oiseau (101) sur la base de ladite image prise, ladite première image de vue à vol d'oiseau (101) étant une image dudit véhicule (100a) et d'une première région environnante (100b) dudit véhicule (100a) vue depuis une vue à vol d'oiseau pour afficher ladite première image de vue à vol d'oiseau générée (101) dans une première zone d'affichage avec une taille fixe sur ledit écran d'affichage (63) ; et
générer une première autre image (102) différente de ladite première image de vue à vol d'oiseau (101) sur la base de ladite image prise pour afficher ladite première autre image générée (102) dans une seconde zone d'affichage avec une taille fixe sur ledit écran d'affichage (63), et
lorsque ledit second mode est sélectionné comme étant ledit mode d'affichage,
générer une seconde image de vue à vol d'oiseau (201) sur la base de ladite image prise, ladite seconde image de vue à vol d'oiseau (201) étant une image dudit véhicule (200a) et d'une seconde région environnante (200b) dudit véhicule (200a) plus large que ladite première région environnante (100b) vue depuis une vue à vol d'oiseau pour afficher ladite seconde image de vue à vol d'oiseau générée (201) dans ladite première zone d'affichage ; et
générer une seconde autre image (202) différente de ladite seconde image de vue à vol d'oiseau (201) sur la base de ladite image prise pour afficher ladite seconde autre image générée (202) dans ladite seconde zone d'affichage.

2. Appareil d'affichage de l'environnement d'un véhicule selon la revendication 1, dans lequel
ladite première autre image (102) et ladite seconde autre image (202) sont des images de direction de déplacement qui sont des images comprenant une région dans une direction de déplacement dudit véhicule, et
ledit moyen de commande d'affichage est configuré pour rétrécir un angle de vue de ladite seconde autre image (202) par rapport à un angle de vue de ladite première autre image (102).

3. Appareil d'affichage de l'environnement d'un véhicule selon la revendication 1 ou 2, dans lequel
ledit moyen de commande d'aide au stationnement est configuré pour déterminer une position d'arrêt cible où ledit véhicule s'arrête provisoirement afin de commuter une direction de déplacement de l'avant à l'arrière,
ledit chemin cible comprend un premier chemin le long duquel ledit véhicule se déplace vers l'avant de ladite position actuelle à ladite position d'arrêt cible et un second chemin le long duquel ledit véhicule se déplace vers l'arrière de ladite position d'arrêt cible à ladite position de stationnement cible, et
ledit moyen de commande d'affichage est configuré, lorsque ledit second mode est sélectionné comme ledit mode d'affichage, pour afficher à la fois ladite position d'arrêt cible et ladite position de stationnement cible dans ladite seconde image de vue à vol d'oiseau (201) au moins jusqu'à ce que ledit véhicule atteigne ladite position d'arrêt cible à partir de ladite position actuelle.
